# EUROPÄISCHE PATENTSCHRIFT

(11) **EP 0 355 532 B1**
(45) Veröffentlichungstag und Bekanntmachung des Hinweises auf die Patenterteilung: **26.10.1994**
(21) Anmeldenummer: 89114465.1
(22) Anmeldetag: 04.08.1989
(51) Int. Cl.: H04L 12/10, H04L 12/40

(54) **Anordnung zum Übertragen von Daten und einer Versorgungsspannung über eine Busleitung**
Arrangement for transmitting data and supply voltage via a bus
Dispositif pour la transmission de données et d'une tension d'alimentation sur un bus

(30) Priorität: 19.08.1988 DE 3828272
(43) Veröffentlichungstag der Anmeldung: 28.02.1990
(73) Patentinhaber: SIEMENS AKTIENGESELLSCHAFT, 80333 München (DE)
(72) Erfinder: Muhr, Andreas, D-7515 Linkenheim-Hochstetten (DE); Thamm, Peter, Dr., D-7500 Karlsruhe 41 (DE)

(56) Entgegenhaltungen:
- EP-A- 0 134 174
- DE-A- 3 043 059
- DE-B- 2 113 931
- FR-A- 2 509 889

## Beschreibung

In der DE-B- 21 13 931 ist eine Anordnung beschrieben, in der mehrere Empfänger mit einer Zentraleinheit über je eine Zweidrahtleitung verbunden sind, über die Impulse und die Versorgungsspannung für den jeweiligen Empfänger übertragen werden. Die Impulse werden mittels Differentialübertrager in die Leitungen eingespeist und aus diesen entnommen. Die Differentialwicklungen der Übertrager sind wechselstrommäßig mittels eines Kondensators in Reihe geschaltet. Zur Stromversorgung der Empfänger dient ein Transformator, der je Empfänger eine Sekundärwicklung und einen an diese angeschlossenen Gleichrichter aufweist. Die Gleichspannungen werden an den die Differentialwicklungen verbindenden Kondensatoren angelegt und in den Empfängern an den entsprechenden, mit den Differentialwicklungen verbundenen Kondensatoren abgenommen. Die bekannte Anordnung ist bei galvanischer Trennung von Sender und Empfänger nur für einen sternförmigen Anschluß der Empfänger an die Zentraleinheit geeignet, nicht dagegen für eine alle Empfänger und die Zentrale verbindende Busleitung.

In der EP-A- 0 134 174 ist ein Bussystem beschrieben, bei dem die die Informationen enthaltenden Impulse eine als Versorgungsspannung dienende Gleichspannung modulieren. Eine galvanische Trennung zwischen den Teilnehmern des Bussystems ist nicht vorgesehen.

Der vorliegenden Erfindung liegt die Aufgabe zugrunde, eine Anordnung der im Oberbegriff des Anspruchs 1 angegebenen Art zu schaffen, deren Geräte an eine Busleitung galvanisch getrennt angeschlossen sind.

Erfindungsgemäß wird diese Aufgabe mit den im kennzeichnenden Teil des Anspruchs 1 angegebenen Maßnahmen gelöst.

Die neue Anordnung wird mit besonderem Vorteil in der Verfahrens- und Prozeßtechnik eingesetzt, wenn räumlich voneinander entfernt liegende Feldgeräte eigensicher und explosionsgeschützt mit geringem Aufwand an eine entfernte Zentrale angeschlossen werden sollen.

Anhand der Zeichnung werden im folgenden die Erfindung sowie deren Ausgestaltungen und Ergänzungen näher beschrieben und erläutert.

Es zeigen
- die Figuren 1 und 3: Schaltbilder von Ausführungsbeispielen der Erfindung,
- Figur 2: Einzelheiten des Ausführungsbeispiels nach Figur 1.

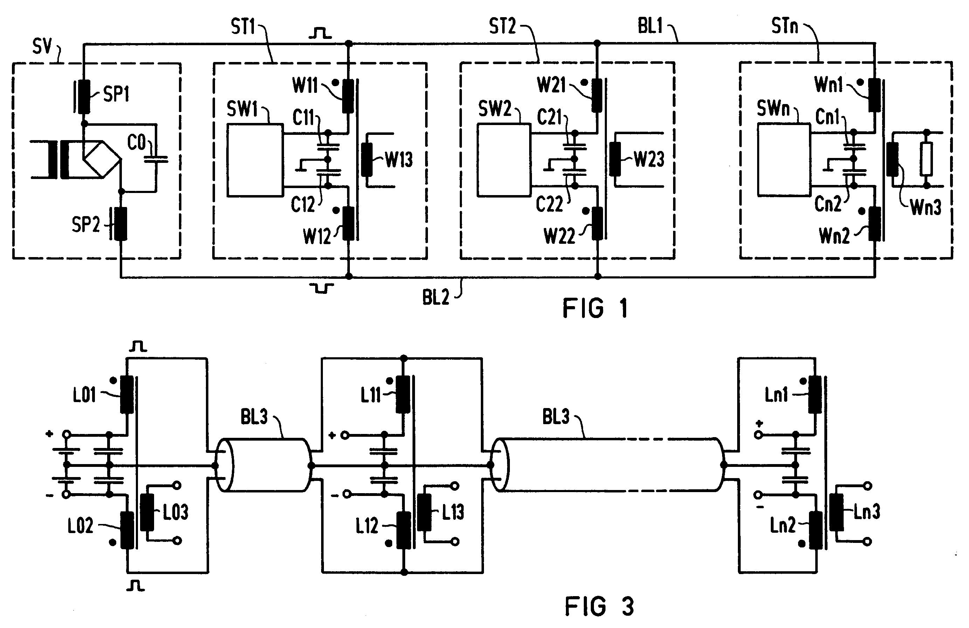

In Figur 1 sind mit BL1, BL2 die beiden Adern einer zweiadrigen Busleitung bezeichnet, an die mehrere Geräte ST1, ST2 ... STn, z. B. digital arbeitende Sensoren und Aktoren, angeschlossen sind. Zu und von diesen sollen digitale Meß- und Stellsignale sowie weitere Daten, wie Status- und Fehlermeldungen, Parameter und so fort übertragen werden. Die Busleitung dient nicht nur zur Übertragung von Informationen, sondern auch zur Spannungsversorgung der Geräte. Da die Busleitung galvanisch von den Geräten und selbstverständlich auch die Geräte untereinander galvanisch getrennt sein sollen, enthält jedes Gerät einen Übertrager zum Ein- und Auskoppeln von Informationssignalen in die bzw. aus der Busleitung. Die Übertrager weisen je drei Wicklungen W11, W12, W13; W21, W22, W23 ... Wn1, Wn2, Wn3 auf. Die beiden an die Busleitungen angeschlossenen Wicklungen sind wechselstrommäßig mit Kondensatoren C11, C12, C21, C22 ... Cn1, Cn2 in Reihe geschaltet. An die dritten Wicklungen W13, W23 ... Wn3 sind die Sende- und Empfangseinrichtungen angeschlossen.

Die Geräte werden von einer Stromversorgungseinheit SV über die Busleitung BL1, BL2 mit Energie versorgt. Da im Ausführungsbeispiel auch die Stromversorgungseinheit SV galvanisch von der Busleitung getrennt sein soll, enthält sie einen Netztransformator, dessen gleichgerichtete Ausgangsspannung mittels eines Kondensators C0 gesiebt über Spulen SP1, SP2 in die Busleitung BL1, BL2 eingespeist wird. Die Geräte ST1, ST2 ... STn enthalten Gleichspannungswandler SW1, SW2 ... SWn, die an die Reihenschaltung der Kondensatoren Ci1, Ci2 angeschlossen sind und von der Busleitung BL1, BL2 die Versorgungsspannung über die Wicklungen Wi1, Wi2 erhalten. Die Übertragerwicklungen und die Kondensatoren wirken für die Versorgungsspannung als Siebglieder.

Zweckmäßig ist die Stromversorgungseinheit nicht gesondert an die Busleitung angeschlossen, sondern sie ist Bestandteil eines Gerätes, z. B. einer Zentraleinheit, und ist in diesem wie die Spannungswandler SW1, SW2 ... SWn an die Kondensatoren Ci1, Ci2 angeschlossen. Die Funktion der Spulen SP1, SP2 und des Kondensators C0 wird dann von den in dem Gerät ohnedies vorhandenen Übertragerwicklungen und Kondensatoren übernommen.

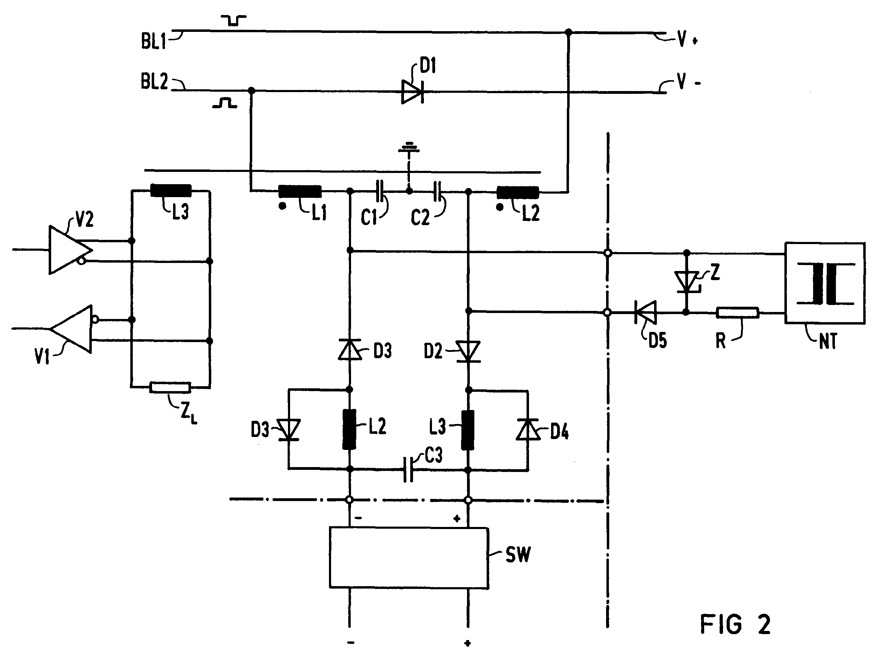

Einzelheiten einer vorteilhaften Anschaltung der Geräte, insbesondere der Spannungswandler an die Busleitung, zeigt das Schaltbild nach Figur 2. Mit BL1, BL2 sind wieder die beiden Adern der Busleitung bezeichnet, auf denen die Informationssignale gegenphasig übertragen werden. Auf der Busleitung BL1 liegt ferner eine positive Versorgungsspannung V+, auf der Busleitung BL2 eine negative V-. Eine Reihenschaltung aus zwei Übertragerwicklungen L1, L2 mit gleicher Windungszahl und zwei Kondensatoren C1, C2 mit gleicher Kapazität liegt zwischen den Adern BL1, BL2. An einer dritten Wicklung L3 des Übertragers liegen ein Empfangsverstärker V1, der ein Differenzverstärker ist, und ein Sendeverstärker V2 als Leitungstreiber, der gegenphasige Signale in die Wicklung L3 speist.

Befindet sich das Gerät am Ende der Busleitung, wie z. B. das Gerät STn in der Anordnung nach Figur 1, wird zweckmäßig an die Wicklung L3 ein Widerstand Z_{L} angeschlossen, der, unter Berücksichtigung des Untersetzungsverhältnisses des Übertragers, so bemessen ist, daß die Busleitung mit dem Wellenwiderstand ab geschlossen ist. Eine solche Anordnung hat gegenüber einem unmittelbaren Abschluß der Busleitung mit einem Widerstand den Vorteil, daß kein Versorgungsstrom zusätzlich verbraucht wird. Wenn das Übersetzungsverhältnis zwischen der Wicklung L3 und den Wicklungen L1, L2 größer als Eins ist, wird der Wellenwiderstand im Verhältnis des Quadrats des Übersetzungsverhältnisses transformiert. Dadurch wird der ohmsche Widerstand Z_{L} größer als der Wellenwiderstand und belastet daher den Leitungstreiber V2 entsprechend gering. Auch hierdurch wird eine Energieeinsparung erreicht. Ferner können für alle Leitungstreiber, unabhängig, ob die zugehörigen Geräte den Abschluß der Busleitung bilden oder nicht, gleiche Leitungstreiber verwendet werden.

Ein Gleichspannungswandler SW liefert eine von der Busleitung galvanisch getrennte Versorgungsspannung für das Gerät. Hierzu eignet sich z. B. ein Spannungswandler, der die Eingangsspannung mit unterschiedlicher Polung abwechselnd auf die Primärwicklung eines Übertragers schaltet, an dessen Sekundärwicklung ein Gleichrichter mit einem nachgeschalteten Siebglied angeschlossen ist. Im allgemeinen erfordern solche Gleichspannungswandler einen großen Energiespeicher, der im Ausführungsbeispiel von einem Kondensator C3 gebildet ist, der mit Drosseln L2, L3, denen Freilaufdioden D3, D4 parallelgeschaltet sind, zu einem Filter ergänzt ist. Damit sich der Kondensator C3 nicht im Falle eines Spannungsabfalls auf der Busleitung, z. B. während der Impulse, oder im Falle eines Kurzschlusses entladen kann, sind in seine Zuleitungen Dioden D2, D3 geschaltet. Spannungsspitzen, die an den Wicklungen L1, L2 bei einem plötzlichen Spannungsabfall auf der Busleitung auftreten können, werden von einer Diode D1 von der Busleitung abgehalten. Wirksam bleibt dagegen die Serienschaltung der Kondensatoren C1, C2, deren Ladung aber im Falle eines Kurzschlusses auf der Busleitung wegen der Induktivität der Wicklungen L1, L2 nicht schlagartig in die Busleitung fließen kann.

Eine etwaige, in dem Gerät enthaltene Stromversorgungseinheit weist ein Netzteil NT mit einem Netztransformator auf, dessen Ausgangsstrom mittels eines Widerstandes R und dessen Ausgangsspannung mittels einer Zenerdiode Z begrenzt sind. Sollen zwecks einer Redundanz der Stromversorgung oder zur Vermeidung eines unzulässig großen Spannungsabfalls auf der Busleitung wegen deren ohmschen Widerstandes mehrere Stromversorgungseinheiten verwendet werden, ist dies möglich. Zur gegenseitigen Entkopplung ist jedoch je Stromversorgungseinheit eine Diode D5 vorzusehen. Auch muß dafür gesorgt werden, daß der Gesamtstrom aller Stromversorgungseinheiten auch im Falle eines Kurzschlusses auf der Busleitung den maximal zulässigen Wert nicht übersteigt.

Die beschriebene Geräteanschaltung eignet sich für Bussysteme, die in explosionsgefährdeten Bereichen eingesetzt werden. Wie schon beschrieben, sind in jeder Geräteanschaltung Maßnahmen getroffen, mit denen unzulässige Strom- und Spannungsspitzen unterdrückt werden. Nicht sichere Bauelemente an gefährdeten Stellen, wie z. B. die Dioden D1, D3, D4, können doppelt ausgeführt und andere Bauelemente, wie z. B. der Elektrolytkondensator C3, durch Verguß geschützt werden. Der Ausgangsstrom und die Ausgangsspannung der Stromversorgungseinheit sind begrenzt.

Figur 3 zeigt ein Busleitungssystem, dessen Busleitung aus einer zweiadrigen geschirmten Leitung BL3 besteht. Die nicht bezeichneten Geräte enthalten wieder jeweils einen Signalübertrager, der mit zwei Wicklungen L01, L02; L11, L12;... Ln1, Ln2 an die Adern der Busleitung angeschlossen ist. Die Mittelanzapfungen dieser Wicklungen liegen kapazitiv am Schirm der Busleitung. Die Speisespannung wird in die Busleitung über die Wicklungen L01, L02 eingespeist, die Mitte der Speisespannung kann an den Schirm gelegt sein. Der Gleichstrom bewirkt keine Magnetisierung des Übertragerkerns, da die Wicklungen bifilar gewickelt sind. Für das Informationssignal aber, das gleichphasig auf die Adern gegeben wird, wirken sie wie ein Differenzübertrager. Diese Schaltung ist im Gegensatz zu der nach Figur 1 auf die Schirmleitung oder einen anderen dritten Leiter angewiesen, arbeitet aber auch streng symmetrisch. Gleichtaktstörungen wirken sich nicht aus. Die Schaltung eignet sich zum Übertragen von Signalen über größere Entfernungen in Störfeldern mit hoher Datenübertragungsrate. Für die Anschaltung der Spannungwandler der Geräte kann die Schaltung nach Figur 2 verwendet werden. Die Hilfsenergieübertragung kann hier größer gewählt werden, da der Übertrager nicht in die Sättigung durch Vormagnetisierung kommt.

## Patentansprüche

1. Anordnung zum Übertragen von Daten zwischen mehreren Geräten und der Versorgungsspannung für die Geräte über eine Busleitung, an welche die Geräte und die Versorgungsspannungsquelle angeschlossen sind, **dadurch gekennzeichnet**, daß die Geräte (ST1, ST2 ... STn) an die Busleitung (BL1, BL2) jeweils mittels eines Übertragers (U1, U2 ... Un) angeschlossen sind, der zwei Wicklungen (Wi1, Wi2) gleicher Windungszahl aufweist, die mit ihren einen Anschlüssen mit der Busleitung (BL1, BL2) verbunden sind und zwischen deren anderen Anschlüssen eine Kapazität (Ci1, Ci2) liegt, an der die Versorgungsspannung abgenommen ist, daß an eine dritte Wicklung (Wi3) Sende- und Empfangseinrichtungen (V1, V2) angeschlossen sind und daß die Versorgungsspannungsquelle über zwei induktive Widerstände (SP1, SP2) an die Busleitung angeschlossen ist.

2. Anordnung nach Anspruch 1, **dadurch gekennzeichnet**, daß die Versorgungsspannungsquelle in einem Gerät enthalten ist und die Versorgungsspannung zwischen den Übertragerwicklungen (Wi1, Wi2) und der Kapazität (Ci1, Ci2) eingespeist ist.

3. Anordnung nach Anspruch 1 oder 2, **dadurch gekennzeichnet**, daß die Kapazität aus der Reihenschaltung von zwei Kondensatoren (Ci1, Ci2) gleicher Kapazität besteht, deren Verbindung an ein Bezugspotential angeschlossen ist.

4. Anordnung nach einem der Ansprüche 1 bis 3, **dadurch gekennzeichnet**, daß die beiden Übertragerwicklungen (Wi1, Wi2) so gepolt sind, daß der Versorgungsstrom die Übertragerkerne in gleicher Richtung magnetisiert.

5. Anordnung nach einem der Ansprüche 1 bis 3, **dadurch gekennzeichnet**, daß die beiden Wicklungen (Li1, Li2) der Übertrager so gepolt sind, daß die durch den Versorgungsstrom hervorgerufenen Magnetisierungen sich gegenseitig aufheben und daß die Busleitung eine dritte Ader, insbesondere einen Schirm, aufweist, mit dem die Verbindungen der Kondensatoren verbunden sind.

6. Anordnung nach einem der Ansprüche 1 bis 5, **dadurch gekennzeichnet**, daß der Reihenschaltung aus den beiden Übertragerwicklungen und der Kapazität eine bezüglich der Versorgungsspannung in Sperrichtung betriebene Diode (D1) parallelgeschaltet ist.

7. Anordnung nach einem der Ansprüche 1 bis 6, **dadurch gekennzeichnet**, daß die Versorgungsspannung über Dioden (D2, D3) abgenommen und einem als Energiespeicher dienenden Kondensator (C3) zugeführt ist.

8. Anordnung nach Anspruch 7, **dadurch gekennzeichnet**, daß die Versorgungsspannung über Siebdrosseln (L2, L3) dem Kondensator (C3) zugeführt ist.

9. Anordnung nach einem der Ansprüche 1 bis 8, **dadurch gekennzeichnet**, daß die Geräte (ST1, ST2 ... STn) je einen galvanisch trennenden Gleichspannungswandler (SW1, SW2 ..., SWn) enthalten, dessen Eingang die Versorgungsspannung von der Busleitung zugeführt ist und aus dem das jeweilige Gerät mit Strom versorgt ist.

10. Anordnung nach einem der Ansprüche 1 bis 9, **dadurch gekennzeichnet**, daß an die dritte Wicklung (Wn3) des den Anschluß der Busleitung bildenden Gerätes (STn) ein Abschlußwiderstand (Z_{L}) angeschlossen ist.

11. Anordnung nach Anspruch 10, **dadurch gekennzeichnet**, daß die Windungszahl der dritten Wicklung (Wn3) größer als die Summe der Windungszahlen der beiden anderen Wicklungen (Wn1, Wn2) ist.

## Claims

1. An arrangement for the transmission of data between a plurality of devices and the supply voltage for the devices via a bus line to which the devices and the supply voltage source are connected, characterised in that the devices (ST1, ST2...STn) are connected to the bus line (BL1, BL2) in each case by means of a transformer (U1, U2 .. Un) which possesses two windings (Wi1, Wi2) with the same number of turns, which are connected by their first terminals to the bus line (BL1, BL2) and between the other terminals of which is arranged a capacitance (Ci1, Ci2) from which the supply voltage is tapped, that transmitting- and receiving devices (V1, V2) are connected to a third winding (Wi3), and that the supply voltage source is connected to the bus line via two inductive resistors (SP1, SP2).

2. An arrangement as claimed in Claim 1, characterised in that the supply voltage source is contained in a device and the supply voltage is fed-in between the transformer windings (Wi1, Wi2) and the capacitance (Ci1, Ci2).

3. An arrangement as claimed in Claim 1 or 2, characterised in that the capacitance consists of the series connection of two capacitors (Ci1, Ci2) of the same capacitance, the connection of which is connected to a reference potential.

4. An arrangement as claimed in one of Claims 1 to 3, characterised in that the two transformer windings (Wi1, Wi2) are poled in such manner that the supply current magnetizes the transformer cores in the same direction.

5. An arrangement as claimed in one of Claims 1 to 3, characterised in that the two windings (Li1, Li2) of the transformers are poled in such manner that the magnetizations produced by the supply current cancel one another out, and that the bus line possesses a third wire, in particular a shield, to which the connections of the capacitors are connected.

6. An arrangement as claimed in one of Claims 1 to 5, characterised in that the series arrangement of the two transformer windings and the capacitance is connected in parallel with a diode (D1) operated in the blocking direction in respect of the supply voltage.

7. An arrangement as claimed in one of Claims 1 to 6, characterised in that the supply voltage is tapped via diodes (D2, D3) and fed to a capacitor (C3) serving as energy store.

8. An arrangement as claimed in Claim 7, characterised in that the supply voltage is fed to the capacitor (C3) via filter chokes (L2, L3).

9. An arrangement as claimed in one of Claims 1 to 8, characterised in that the devices (ST1, ST2 ...STn) each contain a d.c.-isolating d.c. voltage converter (SW1, SW2 ...SWn), the input of which is supplied with the supply voltage from the bus line and from which the respective device is supplied with current.

10. An arrangement as claimed in one of Claims 1 to 9, characterised in that a terminal resistor (Z_{L}) is connected to the third winding (Wn3) of the device (STn) which forms the terminal of the bus line.

11. An arrangement as claimed in Claim 10, characterised in that the number of turns of the third winding (Wn3) is greater than the sum of the number of turns of the two other windings (Wn1, Wn2).

## Revendications

1. Dispositif pour transmettre des données entre plusieurs appareils et la tension d'alimentation pour les appareils par l'intermédiaire d'une ligne formant bus, à laquelle sont raccordés les appareils et la source de tension d'alimentation, caractérisé par le fait que les appareils (ST1, ST2...STn) sont raccordés à la ligne formant bus (BL1, BL2) respectivement au moyen d'un transformateur (U1,U2... Un) qui comporte deux enroulements (Wi1, Wi2) possédant un même nombre de spires et qui sont reliés, par des premières bornes, à la ligne formant bus (BL1,BL2), tandis qu'entre leurs autres bornes est présente une capacité (Ci1, Ci2), aux bornes de laquelle peut être prélevée la tension d'alimentation, que des dispositifs d'émission et de réception (V1,V2) sont raccordés à un troisième enroulement (Wi3) et que la source de tension d'alimentation est raccordée à la ligne formant bus par l'intermédiaire de deux résistances inductives (SP1,SP2).

2. Dispositif suivant la revendication 1, caractérisé par le fait que la source de tension d'alimentation est contenue dans un appareil et que la tension d'alimentation est injectée entre les enroulements (Wi1, Wi2) du transformateur et la capacité (Ci1, Ci2).

3. Dispositif suivant la revendication 1 ou 2, caractérisé par le fait que la capacité est constituée par le circuit série de deux condensateurs (Ci1, Ci2) de même capacité, dont le point de jonction est placé au potentiel de référence.

4. Dispositif suivant l'une des revendications 1 à 3, caractérisé par le fait que les deux enroulements (Wi1, Wi2) du transformateur sont polarisés de telle sorte que le courant d'alimentation aimante les noyaux du transformateur dans le même sens.

5. Dispositif suivant l'une des revendications 1 à 3, caractérisé par le fait que les deux enroulements (Li1, Li2) du transformateur sont polarisés de telle sorte que les aimantations provoquées par le courant d'alimentation s'annihilent et que la ligne formant bus possède un troisième conducteur, notamment un blindage, auquel sont reliés les éléments de liaison des condensateurs.

6. Dispositif suivant l'une des revendications 1 à 5, caractérisé par le fait qu'une diode (D1) fonctionnant dans le sens du blocage par rapport à la tension d'alimentation est branchée en parallèle avec le circuit série formé par les deux enroulements du transformateur et la capacité.

7. Dispositif suivant l'une des revendications 1 à 6, caractérisé par le fait que la tension d'alimentation est prélevée par l'intermédiaire de diodes (D2,D3) et est envoyée à un condensateur (C3) utilisé comme accumulateur d'énergie.

8. Dispositif suivant la revendication 7, caractérisé par le fait que la tension d'alimentation est envoyée au condensateur (C3) par l'intermédiaire de selfs de filtrage (L2,L3).

9. Dispositif suivant l'une des revendications 1 à 8, caractérisé par le fait que les appareils (ST1,ST2...STn) contiennent chacun un convertisseur continu (SW1,SW2...SWn) qui réalise une séparation galvanique et à l'entrée duquel la tension d'alimentation est envoyée par la ligne formant bus et à partir duquel l'appareil respectif est alimenté en courant.

10. Dispositif suivant l'une des revendications 1 à 9, caractérisé par le fait qu'une résistance de terminaison (Z_{L}) est raccordée au troisième enroulement (Wn3) de l'appareil (STn) constituant la borne de la ligne formant bus.

11. Dispositif suivant la revendication 10, caractérisé par le fait que le nombre de spires du troisième enroulement (Wn3) est supérieur à la somme des nombres de spires des deux autres enroulements (Wn1, Wn2).
